# EUROPEAN PATENT SPECIFICATION

(11) **EP 1 891 852 B1**
(45) Date of publication and mention of the grant of the patent: **03.02.2010**
(21) Application number: 07115028.8
(22) Date of filing: 27.08.2007
(51) Int. Cl.: A01D 46/30

(54) **Method and collection vehicle for harvesting crops growing on stems**
Verfahren und Erntefahrzeug zur Ernte von auf Stämmen wachsenden Kulturen
Procédé et véhicule de collecte pour la moisson de récoltes sur tige

(30) Priority: 25.08.2006 DK 200601108
(43) Date of publication of application: 27.02.2008
(73) Proprietor: EGA MATIC ApS, 5250 Odense SV (DK)
(72) Inventor: Beiskjær, Peder Zoëga, 5290 Marslev (DK)
(74) Representative: Tellefsen, Jens J.

(56) References cited:
- EP-A- 1 658 767
- JP-A- 4 166 013
- JP-A- 2004 180 554
- NL-C2- 1 024 702
- US-A1- 2005 126 144

## Description

### Field of the Invention

The present invention is directed to a method for harvesting fruits and vegetables in particular fruits and vegetables in bunches or clusters such as truss tomatoes, grapes and the like. Furthermore, the invention is also directed to a collection vehicle on which vehicle the implements for automatically carrying out the method are arranged.

### Background of the Invention

Growing fruits and vegetables has over the years been increasingly industrialized so that the yield of the plants has been maximized in relation to the area/space a plant occupies and at the same time the growing conditions, i.e. both the climate and the nutrients added to the plant in the soil in order to be able to create the most favourable growing conditions for the plants in order to increase the yield.

For a number of fruits and vegetables harvesting of these vegetables and fruits has been industrialized, but for a number of other vegetables and fruits the harvesting procedure is carried out by manual labour. There are many reasons for using manual labour in that the fruits/vegetables may be harvested in a manner which is particularly careful, so that the fruits or vegetables are not damaged during the harvesting process.

For vegetables such as truss tomatoes, grapes, cucumbers, squash and the like the industrialized growing of these plants has resulted in a very uniform and repeatable growth so that it is possible to apply automatic means to the harvesting of these vegetables or fruits.

US 2005/126 144 A1 discloses a robotic fruit picking system using vision and cutting means.

In this application reference will be made to vegetables in that the main application of the present invention is for truss tomatoes, but it is contemplated that the method as well as the vehicle without departing from the scope of protection as defined by the appended claims maybe used for other vegetables or fruits (crops) which exhibit the same main features, namely a stem on which the vegetables or fruits grow either as single fruits or in bunches, and the fruits or vegetables grow off the main stem on side stems.

### Object of the Invention

An object of the present invention is to provide a method for harvesting fruits and vegetables where a collection vehicle is used in an automatic process so that manual labour and interference may be avoided altogether.

When growing e.g. truss tomatoes the tomato plants are arranged in a growing medium into which medium fertilizer, water and other nutrients are supplied in a predetermined rate in order to achieve optimal growth and production of tomatoes. As the plant usually grows inside a glass house, the plant will be supported by e.g. a pulling wire so that the plant will grow in a substantially vertical direction. The fruit bearing side stems will develop near the top of the plant so that when the truss of tomatoes is removed from the side stem, i.e. by e.g. cutting the side stem in relation to the main stem the main stem will grow, develop three side stems only developing leaves and thereafter develop a new side stem carrying a truss of tomatoes. As the main stem grows, i.e. the stem becomes longer from the top of the stem to the roots arranged in the medium, the top of the plant is maintained at substantially the same height whereby the main stem from which the tomatoes have already been collected will be arranged on e.g. the floor. Typically tomato plants developing truss tomatoes will grow to a height of 16-20 metres, but in the industrialized growing of these tomatoes most of the length of stem will be arranged on the floor so that the plant itself will only be 3-4 metres high.

For other vegetables or fruits the growing pattern may be different, but the regularity and systematic development of side stems, leaves and fruits/vegetables will have a similar or corresponding pattern of regularity.

Returning to the question of growing truss tomatoes the plant medium, i.e. the medium in which the tomato plants will develop its roots are traditionally placed with a mutual distance of 30-40 cm between each tomato plant. The tomato plants are arranged in long rows in the glass houses where each row is separated by an access aisle so that personnel and caretakers may have access to the plants. Usually all watering and supply of nutrients, fertilizers and the like are regulated by a central system and each medium is connected by appropriate piping to reservoirs from which the necessary nutrients, fertilizers and water may be supplied.

### Description of the Invention

The invention sets out to provide a method for harvesting fruits and vegetables in a manner whereby the harvesting process may be carried out by a machine thereby in a substantially automatic fashion. This is provided by a method for harvesting fruits or vegetables, in particular fruits and vegetables in bunches or clusters such as truss tomatoes, grapes and the like. Furthermore, the invention is also directed to a collection vehicle on which vehicle the implements for automatically carrying out the method are arranged.

The invention therefore provides a novel method for harvesting fruits or vegetables, in particular fruits or vegetables in bunches or clusters, such as truss tomatoes, grapes and the like where the method comprises the following steps :
a) placing a collection vehicle adjacent a fruit bearing plant along a row of fruit bearing plants;
b) activating a vision system, such that the vision system will recognise the presence of a bunch or cluster of fruits or vegetables on said plant, and determine if the fruits or vegetables are ripe for harvesting; if the cluster or bunch is ripe for harvesting the method proceeds to step c) or else proceed to the following plant and proceed with step a);
c) activating a first gripping means arranged below a cutting station for gripping a fruit bearing stem and pulling said stem slightly towards the vehicle, which gripping means are extendable from the collection vehicle, and which gripping means are moveable in a direction parallel to the row of vehicle travel;
d) activating a second gripping means arranged above the cutting station, where said second gripping means has the same functionalities as the first gripping means;
e) adjusting the stem into a substantially vertical position, by moving the first and second gripping means in the horizontal plane;
f) simultaneously retracting the first and second gripping means towards the vehicle, whereby the stem enters a cutting station, which cutting station is cylindrical with a vertical axis, and is provided with a vertical slit allowing the stem into the interior of the cutting station, after which the slit in the cutting station is closed;
g) the second gripping means releases the stem;
h) if the vision system has been de-activated it is re-activated, and the cutting station is moved upwards until the vision system detects a side stem carrying a bunch of fruits;
i) cutter means in the cutting station are activated for cutting the side stem, whereby the bunch of fruits is separated from the stem and guided onto a collection device;
j) the cutter station is advanced upwards along the stem for cutting of non-fruit carrying stems;
k) the cutter station opens the vertical slit, and the gripping means releases the stem back to the stems position in the row;
l) the collection vehicle advances to the next fruit bearing plant.

The method may further be improved by the fact that after step g) also the second gripping means releases the stem, and further that the second gripping means are pivoted out to one side in order to allow the cutting station to travel upwards, and that in step h) as the vision system is activated the input from the vision system controls the activation and optionally the direction of travel of the collection device.

The collection vehicle has a size corresponding to vehicles already used in the industrialized growing of tomatoes and may therefore readily travel the aisles between the rows of plants in order to be able to position itself in the vicinity of a stem on which stem the fruits or vegetables are growing. As the vehicle advances along the row of fruit-bearing plants, it will have means to recognize that the vehicle is in the correct position in relation to a stem. As the stem is in the correct position in relation to the vehicle, the gripping means will be activated in order to engage and grip the stem which is to be harvested and by activating the lower gripping means first, it is assured that the stem which is to be harvested will be brought into engagement with the second gripping means. Although the growing of e.g. truss tomatoes has been very automatized, it is still a natural product growing on a plant and as such not everything is linear or 100% consistent, but by providing for the lower gripping means to slightly pull the stem which is to be harvested out of the row of other stems, it is possible for the second upper gripping means to engage and grip the same stem as the lower stem without the risk of gripping a neighbouring stem. Once the gripping means have firmly engaged the stem, the gripping means will adjust themselves in relation to each other and to the vertical slit arranged in the cutting station so that it will be possible by retracting the gripping means and thereby pulling the stem further towards the collection vehicle to place the stem inside the cutting station by way of the vertical slit. The slit is thereafter closed, e.g. by a rotatable cylinder section which is rotated into a position where it completely covers the vertical slit so that the stem will not be able to accidentally escape the cutting station. Thereafter the first gripping means are released and a vision system activated.

The vision system operates in order to determine whether or not there are side stems and whether or not these side stems are carrying leaves or fruits/vegetables. Although great regularity is achieved by the growing of truss tomatoes so that for each time there is a side stem carrying truss tomatoes, the three stems above the truss tomato carrying stem will only develop leaves and thereafter a new stem developing truss tomatoes will be present, it is necessary to verify this as the distribution of side stems may vary. Furthermore the vision system may determine whether the fruits or vegetables are ripe, such that the harvesting process may commence. Determination of the ripeness may be carried out in various ways, such as for example recognise the colour, size, shape, luminance or similar physical properties of the vegetable or fruit in question.

Once the vision system is activated the cutting station is moved upwards until it engages a side stem carrying a bunch of fruits e.g. a truss of tomatoes. By designing the cutting means in the cutting station appropriately it is possible thereafter to activate the cutting means and cut off the side stem whereby the truss of tomatoes is released from the stem. At this stage the truss of tomatoes is guided firstly by gravity along the cutting station onto a collection means for further transport and treatment. At the same time, the cutter station advances upwards in order to cut off the following non-fruit carrying side stems in order to prepare the main stem for its future harvesting cyklus once a further truss of tomatoes has developed and matured.

As these non-fruit or vegetable carrying stems have been cut off, the cutter station opens the vertical slit again, e.g. by rotating the cylindrical section in order to open the slit so that when the gripping means releases the stem, the stem will move back into the row of other fruit or vegetable carrying stems. The collection vehicle will thereafter proceed to the following plants in the row of fruit/vegetable carrying plants and repeat the harvesting cycle.

In practice the entire cycle from the time when the vehicle arrives at a plant to be harvested, harvesting the vegetables and proceeding to the following plant last about 20-25 seconds.

The vision system which is used with the invention shall be able to recognize the size and shape of the tomatoes and preferably also the colour of the tomatoes in that both the size and the colour is an indication on the maturity of the tomatoes. Usually the growing of tomatoes in a greenhouse, where substantially all circumstances and conditions are predetermined by an operator, the vegetables will reach the same level of maturity at the same intervals. When the method is used for other crops it is clear that the vision system shall be programmed in order to take into account the special shape, colour etc. relating to that particular crop. E.g. when harvesting cucumbers the length, width and green colour of the cucumber may determine the appropriate harvesting time.

The invention also provides the collection vehicle suitable for harvesting fruits and vegetables, in particular fruits or vegetables in bunches or clusters such as truss tomatoes, grapes and the like, where said vehicle comprises
- a carrying structure;
- first and second gripping means arranged at a distance from each other, where the gripping means may be manipulated independently and relative to said carrying structure, wherein the gripping means comprise moveable arms for gripping an elongated object about its longitudinal axis;
- a cutting station arranged between the gripping means, where said cutting station comprises a closable entry slit arranged substantially in parallel to the object's longitudinal axis, and cutting means arranged for cutting items projecting substantially perpendicular to said axis;
- a vision system arranged on said carrying structure, so that the vision system may focus and collect data relating to objects situated between the two gripping means;
- control means for manipulating the gripping means, the closable entry slit and the cutting means, in respect of input received from the vision system;
- collection means for receiving and transporting the harvested fruits or vegetables away from the carrying structure.

Generally, the collection vehicle comprises all the necessary components in order to carry out the method as described above. The carrying structure may advantageously be a standard carriage, e.g. provided by Berk of the Netherlands which runs on rails arranged between the rows in the greenhouses. The Berk vehicle substructure is already well-known within the greenhouse environment and the collection vehicle according to the present invention may therefore be built on such a substructure. It should, however, be mentioned in this connection that other substructure and also a substructure comprising endless belts may according to circumstances be used.

The collection means provided on the vehicle in order to receive and collect the fruits or vegetables harvested by the collection vehicle should be adapted to the type of items which are harvested so that e.g. fragile items like tomatoes are handled with extreme care, e.g. by providing cushions and very soft collection means whereas when cucumbers, squash and the like are harvested which vegetables are less fragile other means may be provided.

The collected data from the vision system is used as input for controlling the other means such as gripping means, the action of the different features of the cutting station and the collection means by means of a computing unit. The computing unit is considered an integral part of the vision system in that the type of vision system used within the invention will include specified software in order to translate the information received by the vision system depending on the type of crop which is to be harvested into input which may be decided by the user relating to the gripping means, the cutting station and the collection means.

In a further advantageous embodiment each of the gripping means is in the shape of a rod on which rod in a first end gripping actuators are provided where said actuators are in the shape of elongated members which members may be moved from a first open position, in which first position the elongated members form a V, having its largest opening away from the collection vehicle, and a closed position wherein the elongated members have substantially closed the V, and that the rod is moveable in a first horizontal direction in which first direction the gripping means are moved away from the vehicle, and that further the rod is moveable in a second horizontal direction perpendicular to said first horizontal direction, and further that the first and second gripping means are arranged on a frame which frame is moveable in a vertical direction in relation to the vehicle.

The elongated members which form the V may have a contrabend at the very distal tip of the elongated member, so that as the rod is advanced towards a stem and the elongated members are moved into the close-position, the elongated members will grip and maintain the stem in a relatively firm engagement so that the stem may be manipulated into a substantially vertical position in relation to the vertical slit in the cutting station.

In an alternative embodiment each of the gripping means is in the shape of a rod, on which rod in a first end gripping actuators are provided where said actuators are in the shape of elongated members which members may be moved from a first open position in which first position the elongated members are arranged substantially parallel at a distance between the members, and a closed position wherein the elongated members have substantially closed either by pivoting the distal ends of the elongated members towards each other, or by sliding the elongated members towards each other, and that the rod is moveable in a first horizontal direction in which first direction the gripping means are moved away from the vehicle, and that further the rod is moveable in a second horizontal direction perpendicular to said first horizontal direction, and further that the first and second gripping means are arranged on a frame which frame is moveable in a vertical direction in relation to the vehicle.

Depending on the type of mechanism arranged in the gripping means the gripping actuators may as in this embodiment provide for a substantially linear movement of the elongated members whereas in the embodiment described above the movement of the elongated members will be a more pivoting embodiment about pivot points arranged proximate the end of the rod.

An important part of the invention is the cutting station which in a further advantageous embodiment comprises a central cylinder in the wall of which one or more holders are arranged where said holders by actuating means may be moved from a first position substantially flush with the wall of the cylinder into a second position where the holders engage a stem present inside the central cylinder, that further first cutting means are arranged at an upper end of said central cylinder where said first cutting means are in the shape of upwardly projecting teeth, having sharpened edges, and that a cutting cylinder is rotatably arranged outside said central cylinder, where said cutting cylinder comprises upwardly projecting cutting teeth, where said teeth has sharpened edges, and that openings are provided between the projecting teeth both on the central cylinder and on the cutting cylinder, and that actuating means may rotate the cutting cylinder in relation to the central cylinder, whereby the cutting teeth will move from a superposed position where the teeth on one cylinder overlap the teeth on the other cylinder, to a position where the teeth of one cylinder, substantially cover the openings between the teeth on the other cylinder.

The proper functioning of the cutting station is essential in order to be able to provide a fully automatic solution to the crop harvesting as suggested by the present invention. Particularly the shape of the outward projecting teeth having sharp edges in combination with a cutting cylinder rotatably arranged outside the central cylinder so that the sharp edges of the projecting teeth of the central cylinder and the rotatable cylinder arranged outside the central cylinder may create a very clean cut. This clean cut is important with respect to the health of the plants and furthermore also in order to improve the working routines of the collection vehicle in that a clean and safe cut assures that the side stem has been severed from the main stem so that further movement of the cutting station in relation to the stem does not tear or pull the plant apart. Furthermore, unclean cuts, i.e. where frayed ends or loose fibres are present, are much more prone to plant diseases, fungus attacks and the like, and therefore it is in the interest of the grower to cut the side stems as cleanly as possible.

Once the stem is present inside the central cylinder the holders provided substantially flush with the inner wall of the central cylinder is brought into engagement with the stem in order to hold the stem in a fixed position so that the cutting action as described above results in the side stem being cut and not the main stem being rotated in relation to the turning of the cutting means.

In a further advantageous embodiment of the invention the collection vehicle comprises two or more cone sections which are arranged around the outside of the cutting station, and that one or more shields is/are provided proximate said cone sections, in order to transfer objects cut by the cutting means from the cutting means to collection means.

These sections serve to guide the fruit or vegetable cut off by the cutting means as described above away from the cutting station and onto the collection means so that a smooth transformation of the crop from the plant to the collection means may be provided. The cone sections may be supported by one or more shields also arranged and partly overlapped by part of the cone sections so that the harvested crop is guided by the force of gravity to the collection means.

In order to address the issue of avoiding attacks from fungus, insects or the like in the fresh cuts made by the cutting means of the present invention the collection vehicle is in a further advantageous embodiment provided with a spray, brush or sponge proximate the upper end of the cutting station where said spray, brush or sponge is in liquid communication with a reservoir, and that further means are provided for either directing the nozzle of the spray towards the place where the cutting means has cut on the plant or moving the brush or sponge into contact with the place where the cutting means has cut on the plant.

The spray, brush or sponge is provided in order to apply an insecticide or fungicide through the cutting section in order to avoid insect or fungus attacks, and as the application of a pesticide and/or a sealer, e.g. wax, is carried out immediately after the cut, this leaves very little opportunity for detrimental influences to take effect on the treated plants.

In a still further advantageous embodiment of the invention the collection vehicle comprises two conveyor belts arranged with an overlap, where a first conveyor belt is arranged under the cutting station, such that items/objects cut off by the cutting means is transported on the first conveyor, where said first conveyor is rotatable in opposite directions, where in a first direction objects are transported towards the second underlying conveyor, and in a second direction is transported towards a discard position.

The material from which the belt is made depends entirely on the crop which is to be harvested. However, by providing that the first conveyor is rotatable in opposite directions, i.e. back and forth, it may be achieved that when the motor means which activates the rotation of the first conveyor are coupled to the computing means receiving input from the vision system that the first conveyor may rotate in a first direction when the vision system detects a truss of tomatoes being arranged in the cutting station and rotate in the opposite direction when e.g. leaves are present in the cutting station. In this manner the first conveyor belt will be able to transport the crop in one direction and the leaves which are to be discarded in an opposite direction and thereby carry out an initial sorting of the items which are cut off on the collection vehicle itself. The leaves may be collected in suitable bins or bags, so that they may easily be disposed of or simply left on the ground.

In a still further advantageous embodiment of the invention the collection vehicle is provided with one or more sensors where said sensors may comprise:
- sensor means for detecting the presence of a plant stem between the gripping means;
- sensor means for detecting the upwardly movement or power consumption connected with the upward movement of the cutting station;
- sensor means for monitoring the closure of the vertical slit in the cutting station;
- sensor means for detecting the presence of an item on the collection means.

These sensors will generate output relating to different aspects, e.g. the presence of a plant stem between the gripping means indicating that the gripping means may succesfully be closed and that a plant stem is firmly held between gripping means whereby the different method steps as described above may be performed. Also sensors may be provided in order to determine and regulate the power needed in order to advance the cutting station in an outward direction so that power is increased for this propulsion when the cutting station engages a stem. Particularly when engaging a stem carrying a fruit or vegetable the side stem will usually be thicker and heavier than a side stem carrying only a leaf so that an increase in the power consumption registered by these sensor means will indicate the presence of a potential crop and thereby be able to activate the vision means for confirmation and determination of the status of the crop. As the vehicle is seen as an automatic apparatus, provision of sensors controlling and registering the proper functioning of the various movable parts of the device will make it possible to generate errormessages and alarms to an operator so that one operator may oversee a large number of collection vehicles in that alarms, malfunctions and the like are reported e.g. by wireless means to a central operator's s computer in which the operator then in turn may save and store all information and in response to a given alarm seek out the alarm generating vehicle and alleviate the problem.

In this connection it should be mentioned that the guidance of the vehicles between the different rows of plants may be completely automated so that the vehicle operate on their own, e.g. by radio guidance and will in a known fashion enter docking stations for charging of batteries and the like. In a similar manner the medium in which the tomato plants grow or other plants may be provided with small transponders in order to indicate the presence of a plant so that the correct position of the vehicle in relation to each separate plant may be very well defined.

### Description of the Drawing

The invention will now be explained with respect to the accompanying drawing wherein
- Fig. 1: illustrates a perspective of the collection vehicle,
- Fig. 2: illustrates a side view of the collection vehicle,
- Fig. 3: illustrates the collection vehicle during a stage in the harvesting process; and
- Figs. 4 and 5: illustrate cross sections through the cutting means.

### Detailed Description of the Invention

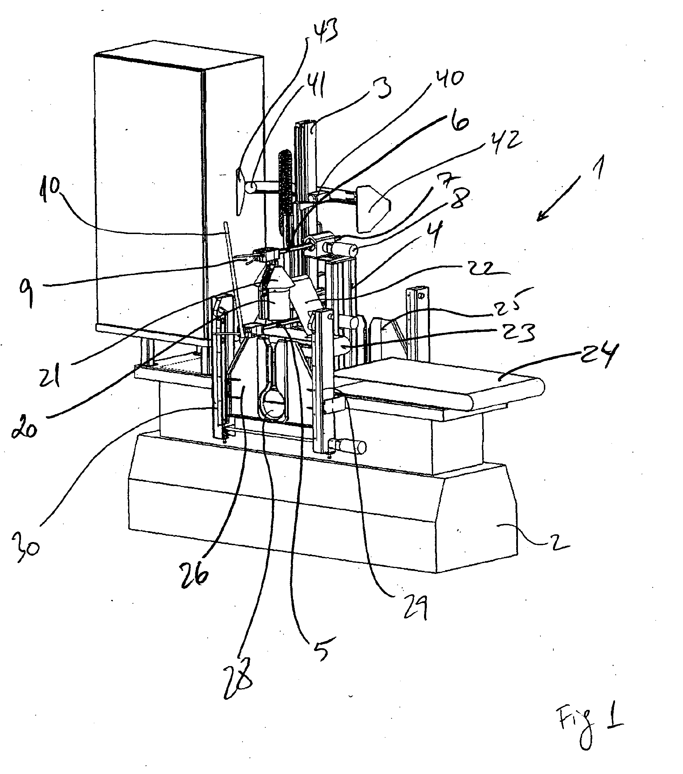

In figure 1 is illustrated a collection vehicle according to the invention. The collection vehicle in this embodiment is constructed on top of a substructure 2 in which substructure power stores in the shape of batteries, propulsion means for propelling the vehicle along a row of plants and a power unit for powering the various aggregates of the vehicle are installed and not illustrated. It is assumed that the vehicle is a completely self-supporting vehicle which may be radio guided by wireless means in operation and which does comprise means for detecting the amount of power left in the batteries in order to travel to a docking station in due time for recharging after which it may continue its harvesting procedure.

The vehicle 1 in addition to the substructure 2 comprises a main tower 3 on which tower 3 the various means for automatically harvesting fruits and vegetables are arranged. Next to and connected to the tower is the first frame member 4 on which frame first and second gripping means 5, 6 are arranged. The first and second gripping means 5, 6 comprises a toothed rod 7 which in combination with the gear wheel arranged at the end of a step or DC motor 8 may move the gripping members 9 back and forth in relation to the main tower 3. A stem 10 of a plant is illustrated in dashed lines. As may be seen from the illustration in figure 1, the first gripping means 5 has engaged the stem 10, but not yet closed its elongated members 9 around the stem.

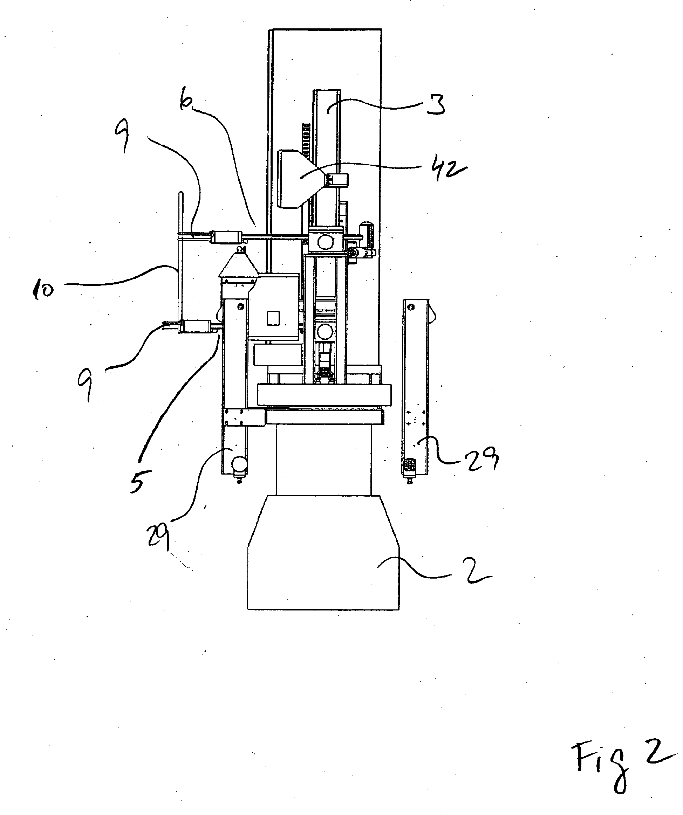

Turning to figure 2 it may be seen that the first gripping means 5 with its elongated members 9 has engaged and slightly pulled the stem 10 towards the main tower 3 so that the second gripping means 6 may engage the stem and the first and second gripping means 5, 6 may mutually move in a horizontal plane in order to adjust the stem in a substantially vertical position, i.e. parallel to the main tower 3.

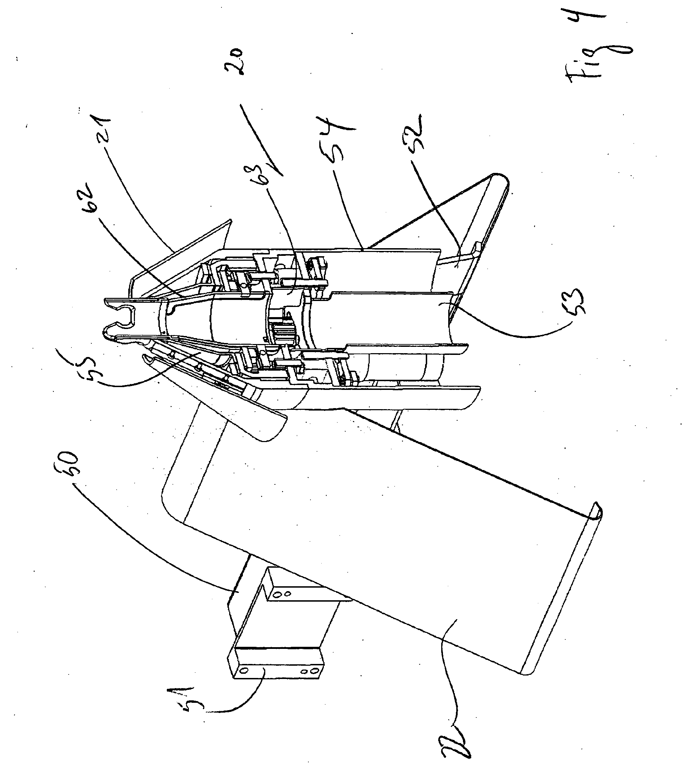

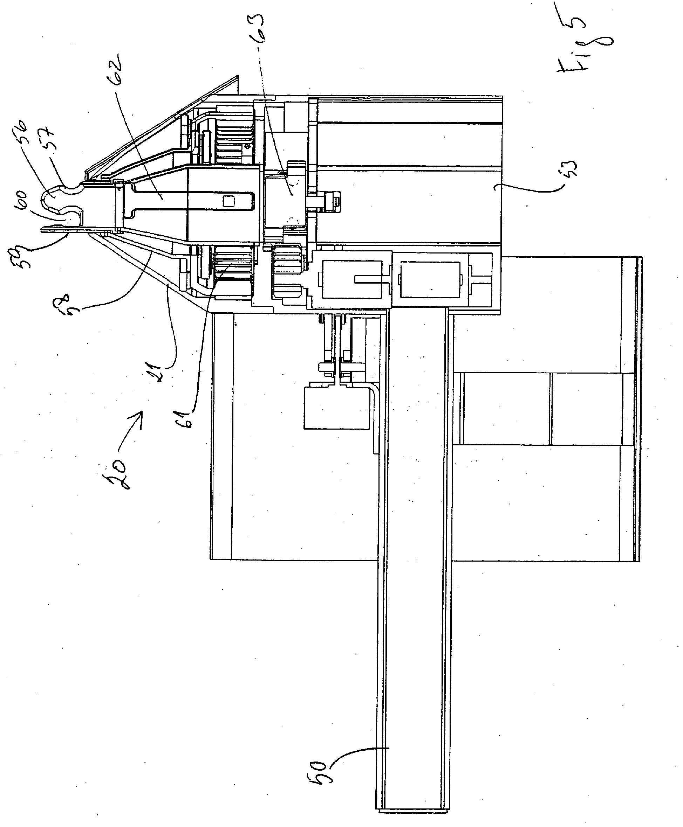

Turning back to figure 1 a cutting station 20 is provided between the first and second gripping means 5, 6. The cutting station will be further explained with reference to figures 4 and 5.

When a fruit or vegetable has been cut from a stem 10, i.e. by cutting the side stem on which the fruit or vegetable grows the crop will slide on cone sections 21 provided on the cutting station and shields 22 and thereby be guided on to collection means. The collection means in this embodiment comprises a first conveyor 23 and a second conveyor 24. The first conveyor is rotatable in opposite directions so that as a crop is harvested and transported on to the first conveyor 23 the direction of rotation of said first conveyor 23 will deliver the crop on to the second conveyor 24 after which the second conveyor 24 may transport the crop to a suitable collection tray or the like. In the case where the side stem on the main stem 10 only develops leaves the first conveyor 23 is made to rotate in the opposite direction so that leaves and the like may be discarded without entering the second conveyor 24 whereby a substantial initial sorting of the cut off items takes place at the source.

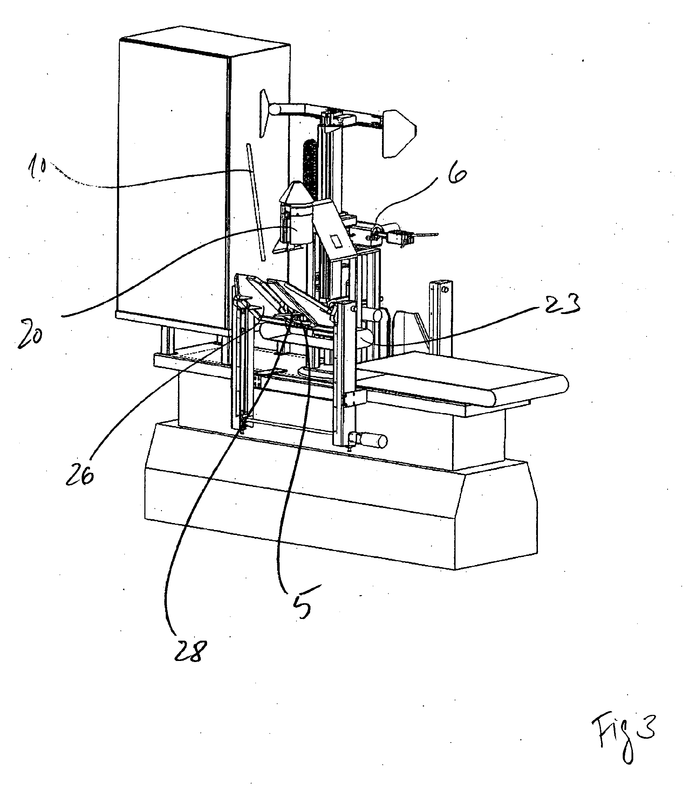

In this particular embodiment the vehicle is provided with side shields 25, 26. Both side shields 25, 26 are provided with keyhole apertures 28 so that by manipulating the side shields in the rails 29, 30 and changing the orientation of the side shields 25, 26 e.g. as illustrated in figure 3 it is possible to bring the side shield into a position directly under the crop to be harvested without interfering with the main stem due to the keyhole aperture 28 and so that the side shield will receive and guide the crop unto the first conveyor means as will be more clearly understood from the description with reference to figure 3.

In order to recognise the presence of a cluster or bunch of fruits or vegetables, e.g. a truss of tomatoes, a vision system is provided. In this embodiment the vision system comprises a camera 40, two light sources of which only one is shown 41 as well as reflectors 42, 43 in order to reflect the emitted light from the light sources 41 into an illuminated plane in which the camera 40 may be focuses so that items in this illuminated focus plane will be the source of input for the camera 40.

A control cabinet in which all controls, interfaces etc. are mounted is also provided on the vehicle.

In figure 1 is illustrated a situation where the first gripping means 5 has engaged and slightly pulled out a stem from a row of plants. The second gripping means 6 is in the process of engaging its elongated members 9 around the stem 10 of the plant. In figure 3 is illustrated a situation where the second gripping means 6 has been pivoted to one side in order to allow the cutting station 20 its upwards travel in order to allow the cutter means to engage the side stems and thereby cut the side stems from the stem 10. Furthermore, the plate 26 with a keyhole aperture 28 has been moved into a position where it will be able to receive and support any crop cut off by the cutter means in the cutting station. The slant of the plate member 26 is such that any crop that will be received by the plate 26 will be guided onto the first conveyor 23. The keyhole aperture 28 is provided in order to allow the first gripping means 5 to maintain and operate its elongated gripping members even when the plate member 26 is being manipulated into the position illustrated in fig. 3.

Turning to figures 4 and 5 the cutting station 20 will be described. The cutting station 20 is arranged on an arm 50, which arm by means of a guide shoe 51 may move up and down the main tower 3 (not illustrated). On the arm 50 the shields 22 are removably attached by brackets 52 so that other shields 22 easily may be attached to the brackets 52 depending on the type of crop being harvested by the collection vehicle 1. The cutting station comprises as explained above cone-shaped segments 21 which provide cover for the mechanism of the cutter means. In the illustrated views in figure 4 and 5 the cutter means has been cut through in order to illustrate the function of the cutter means.

The cutter means comprise two concentrically arranged cylinders where a central cylinder 53 is arranged in connection with the arm 50 so that the cylinder 53 is stationary. In the central cylinder 53 is arranged a slit coinciding with the vertical slit in the cutter mean's outer shell 54.

The concentrically arranged cutting cylinder 55 is able to rotate independently of the central cylinder.

Turning to figure 5 the mechanical workings of the cutter station 20 will be explained. The central cylinder 53 is provided with projecting teeth 56 where the edges of the projecting teeth 56 have been sharpened 57.

The cutting cylinder 58 is also provided with projecting teeth 59 which have the same general shape as the teeth 56 provided on the central cylinder 53. The teeth 56 are separated by openings 60 so that as the teeth 56 of the central cylinder 53 are superposed the teeth 59 of the cutting cylinder 58 the openings are free so that a side stem of a plant may enter into this space between the teeth 56. By activating the gear wheels 61 which engage teeth provided on the inner side of the cutting cylinder 58 the cutting cylinder 58 is rotated in relation to the central cylinder 53 whereby the projecting teeth 59 of the cutting cylinder 58 will close the openings 60 between the teeth 56 provided on the central cylinder 53. Due to the sharp edges 57 provided both on the teeth 56 of the central cylinder 53 and the cutting cylinder 58 a clean cut of a side stem placed in the opening 60 will be performed.

Before rotating the cutting cylinder 58 in relation to the central cylinder 53 internal holding means 62, 63 may be activated in order to firmly engage the stem of the plant to be harvested. The holder 62 is substantially flush with the inner wall of the central cylinder 53 and may pivot in relation to the wall so that the end of the holder 62 engages the stem of a plant placed inside the central cylinder 53. Likewise the holders 63 may be forced into engagement with the stem in order to hold the stem and centralize said stem in relation to the central cylinder.

The invention has been developed and explained with a view to harvesting truss tomatoes in an automatic way, but also tests with other crops which grow on side stems from a main stem have proved to be feasible with a collection vehicle as described above. In order to accommodate different sizes stems and side stems the cutting station and in particular the central and cutting cylinders 53, 58 and its projecting teeth 56, 59 shall be dimensioned to the actual crop which it is desirable to harvest.

## Claims

1. Method for harvesting fruits or vegetables, in particular fruits or vegetables in bunches or clusters, such as truss tomatoes, grapes and the like where the method comprises the following steps :
a) placing a collection vehicle adjacent a fruit bearing plant along a row of fruit bearing plants;
b) activating a vision system, such that the vision system will recognise the presence of a bunch or cluster of fruits or vegetables on said plant, and determine if the fruits or vegetables are ripe for harvesting; if the cluster or bunch is ripe for harvesting the method proceeds to step c) or else proceed to the following plant and proceed with step a);
c) activating a first gripping means arranged below a cutting station for gripping a fruit bearing stem and pulling said stem slightly towards the vehicle, which gripping means are extendable from the collection vehicle, and which gripping means are moveable in a direction parallel to the row of vehicle travel;
d) activating a second gripping means arranged above the cutting station, where said second gripping means has the same functionalities as the first gripping means;
e) adjusting the stem into a substantially vertical position, by moving the first and second gripping means in the horizontal plane;
f) simultaneously retracting the first and second gripping means towards the vehicle, whereby the stem enters a cutting station, which cutting station is cylindrical with a vertical axis, and is provided with a vertical slit allowing the stem into the interior of the cutting station, after which the slit in the cutting station is closed;
g) the second gripping means releases the stem;
h) if the vision system has been de-activated it is re-activated, and the cutting station is moved upwards until the vision system detects a side stem carrying a bunch of fruits;
i) cutter means in the cutting station are activated for cutting the side stem, whereby the bunch of fruits is separated from the stem and guided onto a collection device;
j) the cutter station is advanced upwards along the stem for cutting of non-fruit carrying stems;
k) the cutter station opens the vertical slit, and the gripping means releases the stem back to the stems position in the row;
l) the collection vehicle advances to the next fruit bearing plant.

2. Method according to claim 1, wherein after step f) also the second gripping means releases the stem, and further that the second gripping means are pivoted out to one side in order to allow the cutting station to travel upwards, and that in step g) as the vision system is activated the input from the vision system controls the activation and optionally the direction of travel of the collection device.

3. Collection vehicle, suitable for harvesting fruits or vegetables, in particular fruits or vegetables in bunches or clusters such as truss tomatoes, grapes and the like where said vehicle comprises
- a carrying structure;
- first and second gripping means arranged at a distance from each other, where the gripping means may be manipulated independently and relative to said carrying structure, wherein the gripping means comprises moveable arms for gripping an elongated object about its longitudinal axis;
- a cutting station arranged between the gripping means where said cutting station comprises a closable entry slit arranged substantially in parallel to the object's longitudinal axis, and cutting means arranged for cutting items projecting substantially perpendicular to said axis;
- a vision system arranged on said carrying structure, so that the vision system may focus and collect data relating to objects situated between the two gripping means;
- control means for manipulating the gripping means, the closable entry slit and the cutting means, in respect of input received from the vision system;
- collection means for receiving and transporting the harvested fruits or vegetables away from the carrying structure.

4. Collection vehicle according to claim 3 wherein each of the gripping means is in the shape of a rod, on which rod in a first end gripping actuators are provided, where said actuators is in the shape of elongated members which members may be moved from a first open position in which first position the elongated members forms a V, having its largest opening away from the collection vehicle, and a closed position wherein the elongated members have substantially closed the V, and that the rod is moveable in a first horizontal direction in which first direction the gripping means are moved away from the vehicle, and that further the rod is moveable in a second horizontal direction perpendicular to said first horizontal direction, and further that the first and second gripping means are arranged on a frame which frame is moveable in a vertical direction in relation to the vehicle.

5. Collection vehicle according to claim 3 wherein each of the gripping means is in the shape of a rod on which rod in a first end gripping actuators are provided where said actuators are in the shape of elongated members which members may be moved from a first open position in which first position the elongated members are arranged substantially parallel at a distance between the members, and a closed position wherein the elongated members have substantially closed either by pivoting the distal ends of the elongated members towards each other, or by sliding the elongated members towards each other, and that the rod is moveable in a first horizontal direction in which first direction the gripping means are moved away from the vehicle, and that further the rod is moveable in a second horizontal direction perpendicular to said first horizontal direction, and further that the first and second gripping means are arranged on a frame, which frame is moveable in a vertical direction in relation to the vehicle.

6. Collection vehicle according to claim 3 wherein the cutting station comprises a central cylinder in the wall of which one or more holders are arranged where said holders by actuating means may be moved from a first position substantially flush with the wall of the cylinder into a second position where the holders engage a stem present inside the central cylinder, that further first cutting means are arranged at an upper end of said central cylinder, where said first cutting means are in the shape of upwardly projecting teeth, having sharpened edges, and that a cutting cylinder is rotatably arranged outside said central cylinder, where said cutting cylinder comprises upwardly projecting cutting teeth, where said teeth has sharpened edges, and that openings are provided between the projecting teeth both on the central cylinder and on the cutting cylinder, and that actuating means may rotate the cutting cylinder in relation to the central cylinder, whereby the cutting teeth will move from a superposed position where the teeth on one cylinder overlap the teeth on the other cylinder, to a position where the teeth of one cylinder substantially cover the openings between the teeth on the other cylinder.

7. Collection vehicle according to claim 3 or 6 wherein two or more cone-sections are arranged around the outside of the cutting station, and that one or more shields is/are provided proximate said cone sections, in order to transfer objects cut by the cutting means from the cutting means to collection means.

8. Collection vehicle according to claim 3, wherein a spray, brush or sponge is provided proximate the upper end of the cutting station where said spray, brush or sponge is in liquid communication with a reservoir, and that further means are provided for either directing the nozzle of the spray towards the place where the cutting means has cut on the plant or moving the brush or sponge into contact with the place where the cutting means has cut on the plant.

9. Collection vehicle according to any preceding claim wherein the vehicle comprises two conveyor belts arranged with an overlap where a first conveyor belt is arranged under the cutting station, so that items/objects cut off by the cutting means are transported on the first conveyor where said first conveyor is rotatable in opposite directions where in a first direction objects are transported towards the second underlying conveyor, and in a second direction is transported towards a discard position.

10. Collection vehicle according to claim 3 wherein one or more sensors are provided where said sensors may comprise:
- sensor means for detecting the presence of a plant stem between the gripping means;
- sensor means for detecting the upwardly movement or power consumption connected with the upward movement of the cutting station;
- sensor means for monitoring the closure of the vertical slit in the cutting station;
- sensor means for detecting the presence of an item on the collection means.

## Patentansprüche

1. Verfahren zum Ernten von Früchten oder Gemüsen, insbesondere Früchten oder Gemüsen in Haufen oder Trauben, sowie Tomatentrauben, Weintrauben od.dgl., wobei das Verfahren folgende Schritte umfaßt:
a) Unterbringung eines Sammelfahrzeuges an einer früchtetragenden Pflanze entlang eine Reihe von früchtetragenden Pflanzen;
b) Einsatz eines Schausystems, so daß das Schausystem die Anwesenheit von einer Traube oder Haufen von Früchten oder Gemüsen auf der Pflanze sowie deren Reifheit fürs Ernten erkennt; wenn die Traube oder der Haufen erntereif ist, übergeht das Verfahren nach Schritt c), wenn nicht wird Schritt a) bei der folgenden Pflanze wiederholt;
c) Betätigung eines ersten unter einer Schneidestation zum Greifen eines früchtetragenden Pflanzenstiels angeordneten Greifmittels sowie leichtes Ziehen des Stiels an das Fahrzeug heran, wobei die Greifmittel vom Sammelfahrzeug ausfahrbar sind, und die Greifmittel in einer Richtung parallel mit der Fahrtrichtung des Fahrzeuges verschiebbar sind;
d) Betätigung eines zweiten, oberhalb der Schneidestation angeordneten Greifmittels, wobei das zweite Greifmittel dieselben Funktionalitäten wie das erste Greifmittel aufweist;
e) Anpassung des Stiels in einer im wesentlichen senkrechten Stellung durch Verschiebung des ersten und zweiten Greifmittels in der waagerechten Ebene;
f) gleichzeitiges Zurückziehen vom ersten und zweiten Greifmittel an das Fahrzeug heran, wobei der Stiel in eine Schneidestation eintritt, wobei die Schneidestation zylindrisch ist, die eine senkrechte Achse aufweist und mit einen senkrechten Schlitz versehen ist, der den Stiel in die Schneidestation eintreten läßt, wonach der Schlitz in der Schneidestation zugeschlossen wird;
g) das zweite Greifmittel gibt den Stiel frei;
h) falls das Schausystem ausgeschaltet worden ist, wird es wieder eingeschaltet, und die Schneidestation wird aufwärts verschoben, bis das Schausystem einen Seitenstiel mit einer Fruchttraube nachweist;
i) Schneidemittel in der Schneidestation werden zum Schneiden des Seitenstiels betätigt, wobei die Fruchttraube von dem Stiel abgeschnitten und zu einer Sammelvorrichtung geleitet wird;
j) die Schneidestation wird nach oben dem Stiel entlang zum Abschneiden von nichtfrüchtetragenden Stielen geführt;
k) die Schneidestation öffnet den waagerechten Schlitz, und das Greifmittel läßt den Stiel frei, damit er zur Stielposition in der Reihe zurückkehrt;
l) der Sammelfahrzeug fährt zur nachfolgenden früchtetragenden Pflanze weiter.

2. Verfahren nach Anspruch 1, wobei nach Schritt f) auch das zweite Greifmittel den Stiel freigibt, und weiterhin daß das zweite Greifmittel zum Erlauben einer Aufwärtsverschiebung der Schneidestation nach einer Seite ausgeschwenkt wird, und daß in Schritt g) die Eingabe aus dem Schausystem die Betätigung und auf Wunsch die Fahrtrichtung des Sammelfahrzeuges steuert, wenn das Schausystem eingeschaltet ist.

3. Sammelfahrzeug zum Ernten von Früchten und Gemüsen, insbesondere Früchten und Gemüsen in Haufen oder Trauben, sowie Tomatentrauben, Weintrauben od.dgl., wobei das Fahrzeug folgende Komponente aufweist:
- ein Traggestell;
- mit gegenseitigem Abstand vorgesehene ersten und zweiten Greifmittel, wobei die Greifmittel unabhängig und gegenüber dem Traggestell manipuliert werden können, wobei die Greifmittel zum Greifen eines länglichen Gegenstandes um seine Längsachse verschiebbare Glieder aufweisen;
- eine zwischen den Greifmitteln vorgesehene Schneidestation, die einen im wesentlichen parallel zur Längsachse des Gegenstandes angeordneten, schließbaren Einführungsschlitz aufweist, sowie Schneidemittel zum Schneiden von im wesentlichen senkrecht aus der Achse vorstehenden Objekten;
- ein auf dem Traggestell angeordnetes Schausystem, so daß das Schausystem scharfeinstellen sowie Daten über zwischen den zwei Greifmitteln befindliche Gegenstände einsammeln kann;
- Steuerungsmittel zum Manipulieren der Greifmittel, des schließbaren Eingangsschlitzes sowie der Schniedemittel infolge der vom Schausystem erhaltenen Eingabe;
- Sammelelemente zum Empfangen und Abtransportieren der geernteten Früchte oder Gemüse vom Traggestell.

4. Sammelfahrzeug nach Anspruch 3, wobei jedes Greifmittel als eine Stange gebildet ist und Greifantriebsmittel auf einem ersten Ende davon vorgesehen sind, wobei die Antriebsmittel als längliche Glieder gebildet sind, wobei die Glieder aus einer ersten offenen Position, in der die länglichen Glieder ein V bilden und zwar mit der weitesten Öffnung vom Sammelfahrzeug abgewandt, in eine geschlossene Position, in der die länglichen Glieder im wesentlichen das V geschlossen haben, verschoben werden können, und daß die Stange in einer ersten waagerechten Richtung verschiebbar ist, in der die Greifmittel vom Fahrzeug ab verschoben werden, und daß weiterhin die Stange in einer senkrecht auf der ersten waagerechten Richtung stehenden zweiten waagerechten Richtung verschiebbar ist, und weiterhin daß das erste und zweite Greifmittel auf einem in senkrechter Richtung gegenüber dem Fahrzeug verschiebbaren Rahmen angeordnet sind.

5. Sammelfahrzeug nach Anspruch 3, wobei jedes Greifmittel als eine Stange gebildet ist, und auf einem ersten Ende davon Greifantriebsmittel vorgesehen sind, wobei die Antriebsmittel als längliche Glieder gebildet sind, wobei die Glieder aus einer ersten offenen Position, in der sie im wesentlichen parallel und beabstandet zwischen den Gliedern angeordnet sind, und eine geschlossene Position, in der die länglichen Glieder im wesentlichen geschlossen haben, entweder durch Schwenkung der distalen Enden der länglichen Glieder gegeneinander oder durch Gegeneinandergleiten der länglichen Glieder, und daß die Stange in einer ersten waagerechten Richtung verschiebbar ist, in der die Greifmittel vom Fahrzeug ab verschoben werden, und daß weiterhin die Stange in einer zweiten, senkrecht auf der ersten waagerechten Richtung stehenden zweiten Richtung verschiebbar ist, und weiterhin daß das erste und zweite Greifmittel auf einem in senkrechter Richtung gegenüber dem Fahrzeug verschiebbaren Rahmen angeordnet sind.

6. Sammelfahrzeug nach Anspruch 3, wobei die Schneidestation einen zentralen Zylinder aufweist, in dessen Wand eine oder mehrere Halterungen vorgesehen sind, wobei die Halterungen durch Antreibsmittel aus einer ersten, im wesentlichen mit dem Zylinderwand bündigen Position in eine zweite Position verschoben werden, worin die Halterungen mit einem innerhalb des zentralen Zylinders vorliegenden Stiel eingreifen, daß weiterhin erste Schneidemittel am oberen Ende des zentralen Zylinders angeordnet sind, wobei die ersten Schneidemittel als eine aufwärts vorstehende Verzahnung mit geschärften Rändern geformt sind, und daß ein Schneidezylinder außerhalb des zentralen Zylinders schwenkbar angeordnet ist, wobei der Schneidezylinder aufwärts vorstehende und mit geschärften Rändern versehenen Schneidezähne aufweist, und daß die Öffnungen zwischen den vorstehenden Zähnen sowohl am zentralen Zylinder als am Schneidezylinder vorgesehen sind, und daß der Schneidezylinder durch die Antriebsmittel gegenüber dem zentralen Zylinder schwenkbar ist, wobei die Schneideverzahnung aus einer überlagerten Position, worin die Verzahnung an einem Zylinder die Verzahnung des anderen Zylinders übergreift, in eine Position, in der die Verzahnung des einen Zylinders im wesentlichen die Öffnungen zwischen die Verzahnung des zweiten Zylinders deckt, verschoben wird.

7. Sammelfahrzeug nach Anspruch 3 oder 6, wobei zwei oder mehrere kegelförmige Abschnitte um die Außenseite der Schneidestation angeordnet sind, und daß zur Überführung der von den Schneidemitteln geschnittenen Objekte vom Schneidemittel zur Sammeleinrichtung ein oder mehrere Schilder in der Nähe von den kegelförmigen Abschnitten angeordnet ist/sind.

8. Sammelfahrzeug nach Anspruch 3, wobei ein Zerstäuber, eine Bürste oder ein Schwamm in der Nähe von dem oberen Ende der Schneidestation angeordnet ist, wobei der Zerstäuber, die Bürste oder der Schwamm in Flüssigkeitsverbindung mit einem Speicher steht, und daß weitere Mittel vorgesehen sind, entweder zur Lenkung der Zerstäuberdüse an die vom Schneidemittel erzeugte Schnittstelle an der Pflanze oder Kontaktieren von der Bürste oder dem Schwamm mit der genannte Schnittstelle der Pflanze.

9. Sammelfahrzeug nach irgendeinem der vorhergehenden Ansprüche, wobei der Fahrzeug zwei mit einer Überlappung versehene Förderbänder aufweist, wobei das erste Förderband unter der Schneidestation angeordnet ist, so da durch die Schneidemittel abgeschnittene Gegenstände/Objekte auf dem ersten Förderer transportiert werden, wobei der erste Förderer in umgekehrte Richtungen schwenkbar ist, wobei in einer ersten Richtung Gegenstände gegen einen zweiten unterliegenden Förderer und in einer zweiten Richtung gegen eine Abwerfposition transportiert werden.

10. Sammelfahrzeug nach Anspruch 3, wobei ein oder mehrere Sensor/en vorgesehen ist/sind, der/die folgende Komponente aufweist/aufweisen:
- Sensormittel zur Ermittlung der Anwesenheit eines Pflanzenstiels zwischen den Greifmitteln;
- Sensormittel zur Ermittlung einer Aufwärtsverschiebung oder eines mit dem Aufwärtsverschiebung der Schneidestation verbundenen Kraftverbrauches;
- Sensormittel zur Überwachung des Verschließens des senkrechten Schlitzes in der Schneidestation;
- Sensormittel zur Überwachung der Anwesenheit von einem Objekt auf der Sammelvorrichtung.

## Revendications

1. Procédé pour cueillir des fruits ou des légumes, en particulier des fruits ou des légumes en bottes ou en grappes, tels que des tomates en grappes, des raisins et similaires, dans lequel le procédé comprend les étapes suivantes consistant à :
a) placer un véhicule de collecte de manière adjacente à une plante portant des fruits le long d'une rangée de plantes portant des fruits ;
b) activer un système de vision, de sorte que le système de vision reconnaît la présence d'une botte ou d'une grappe de fruits ou de légumes sur ladite plante, et déterminer si les fruits ou les légumes sont mûrs pour les cueillir ; si la grappe ou la botte est mûre pour la cueillette, le procédé passe à l'étape c) ou bien continue jusqu'à la plante suivante et passe à l'étape a) ;
c) activer des premiers moyens de préhension agencés au-dessous d'une station de coupe pour saisir une tige portant des fruits et tirer ladite tige légèrement vers le véhicule, lesquels moyens de préhension sont extensibles à partir du véhicule de collecte, et lesquels moyens de préhension sont mobiles dans une direction parallèle à la rangée de déplacement du véhicule ;
d) activer des seconds moyens de préhension agencés au-dessus de la station de coupe, où lesdits seconds moyens de préhension ont les mêmes fonctionnalités que les premiers moyens de préhension ;
e) ajuster la tige dans une position sensiblement verticale, en déplaçant les premier et second moyens de préhension dans le plan horizontal ;
f) rétracter simultanément les premier et second moyens de préhension vers le véhicule, moyennant quoi la tige entre dans une station de coupe, ladite station de coupe est cylindrique avec un axe vertical, et est prévue avec une fente verticale permettant à la tige d'entrer à l'intérieur de la station de coupe, après quoi la fente dans la station de coupe est fermée ;
g) les seconds moyens de préhension libèrent la tige ;
h) si le système de vision a été désactivé, il est activé à nouveau et la station de coupe est déplacée vers le haut jusqu'à ce que le système de vision détecte une tige latérale portant une grappe de fruits ;
i) des moyens de coupe dans la station de coupe sont activés pour couper la tige latérale, moyennant quoi la grappe de fruits est séparée de la tige et guidée sur un dispositif de collecte ;
j) la station de coupe est avancée vers le haut le long de la tige pour couper les tiges ne portant pas de fruit ;
k) la station de coupe ouvre la fente verticale, et les moyens de préhension libèrent la tige et la ramènent dans la position des tiges dans la rangée ;
l) le véhicule de collecte avance jusqu'à la prochaine plante portant des fruits.

2. Procédé selon la revendication 1, dans lequel après l'étape f), également les seconds moyens de préhension libèrent la tige, et en outre les seconds moyens de préhension sont pivotés sur un côté afin de permettre à la station de coupe de se déplacer vers le haut, et à l'étape g) étant donné que le système de vision est activé, l'entrée provenant du système de vision commande l'activation et facultativement la direction de déplacement du dispositif de collecte.

3. Véhicule de collecte, approprié pour cueillir des fruits ou des légumes, en particulier des fruits ou des légumes en bottes ou grappes tels que les tomates en grappes, les raisins et similaires, dans lequel ledit véhicule comprend :
une structure de support ;
des premiers et seconds moyens de préhension agencés à une certaine distance les uns des autres, où les moyens de préhension peuvent être manipulés indépendamment et par rapport à ladite structure de support, dans lequel les moyens de préhension comprennent des bras mobiles pour saisir un objet allongé autour de leur axe longitudinal ;
une station de coupe agencée entre les moyens de préhension dans lequel ladite station de coupe comprend une fente d'entrée refermable agencée sensiblement parallèlement à l'axe longitudinal de l'objet, et des moyens de coupe agencés pour couper des produits faisant saillie sensiblement perpendiculairement audit axe ;
un système de vision agencé sur ladite structure de support, de sorte que le système de vision peut concentrer et collecter des données concernant des objets situés entre les deux moyens de préhension ;
des moyens de commande pour manipuler les moyens de préhension, la fente d'entrée refermable et les moyens de coupe, par rapport à l'entrée reçue par le système de vision ;
des moyens de collecte pour recevoir et transporter les fruits ou légumes cueillis à distance de la structure de support.

4. Véhicule de collecte selon la revendication 3, dans lequel chacun des moyens de préhension a la forme d'une tige sur laquelle, à une première extrémité, on prévoit des actionneurs de préhension, dans lequel lesdits actionneurs se présentent sous la forme d'éléments allongés, qui peuvent être déplacés d'une première position ouverte dans laquelle première position, les éléments allongés forment un V ayant sa plus grande ouverture à distance du véhicule de collecte, et une position fermée dans laquelle les éléments allongés ont sensiblement fermé le V, et la tige est mobile dans une première direction horizontale dans laquelle, les moyens de préhension sont éloignés du véhicule, et en outre la tige est mobile dans une seconde direction horizontale perpendiculaire à ladite première direction horizontale, et en outre les premiers et seconds moyens de préhension sont agencés sur un châssis, lequel châssis est mobile dans une direction verticale par rapport au véhicule.

5. Véhicule de collecte selon la revendication 3, dans lequel chacun des moyens de préhension a la forme d'une tige sur laquelle, à une première extrémité, on prévoit des actionneurs de préhension dans lequel lesdits actionneurs se présentent sous la forme d'éléments allongés, lesquels éléments peuvent être déplacés d'une première position ouverte, dans laquelle, les éléments allongés sont agencés de manière sensiblement parallèle à une certaine distance entre les éléments, et une position fermée dans laquelle les éléments allongés se sont sensiblement fermés, par pivotement des extrémités distales des éléments allongés l'une vers l'autre ou bien par glissement des éléments allongés l'un vers l'autre, et la tige est mobile dans une première direction horizontale dans laquelle les moyens de préhension sont éloignés du véhicule et en outre la tige est mobile dans une seconde direction horizontale par rapport à ladite première direction horizontale, et en outre les premiers et seconds moyens de préhension sont agencés sur un châssis qui est mobile dans une direction verticale par rapport au véhicule.

6. Véhicule de collecte selon la revendication 3, dans lequel la station de coupe comprend un cylindre central dans la paroi duquel un ou plusieurs supports sont agencés, dans lequel lesdits supports grâce à des moyens d'actionnement, peuvent être déplacés d'une première position sensiblement de niveau avec la paroi du cylindre dans une seconde position dans laquelle les supports coopèrent avec une tige présente dans le cylindre central, en outre des premiers moyens de coupe sont agencés au niveau d'une extrémité supérieure dudit cylindre central, dans lequel lesdits premiers moyens de coupe ont la forme de dents en saillie vers le haut, ayant des bords aiguisés, et un cylindre de coupe est agencé en rotation à l'extérieur dudit cylindre central, dans lequel ledit cylindre de coupe comprend des dents de coupe en saillie vers le haut, dans lequel lesdites dents ont des bords aiguisés, et des ouvertures sont prévues entre les dents en saillie, à la fois sur le cylindre central et sur le cylindre de coupe, et des moyens d'actionnement peuvent faire tourner le cylindre de coupe par rapport au cylindre central, moyennant quoi les dents de coupe passent d'une position superposée dans laquelle les dents sur le cylindre coïncident avec les dents sur l'autre cylindre, à une position dans laquelle les dents d'un cylindre coïncident sensiblement avec les ouvertures entre les dents sur l'autre cylindre.

7. Dispositif de collecte selon la revendication 3 ou 6, dans lequel deux sections coniques ou plus sont agencées autour de l'extérieur de la station de coupe, et une ou plusieurs protections sont prévues à proximité desdites sections coniques, afin de transférer des objets coupés par les moyens de coupe, des moyens de coupe aux moyens de collecte.

8. Véhicule de collecte selon la revendication 3, dans lequel on prévoit une pulvérisation, une brosse ou une éponge à proximité de l'extrémité supérieure de la station de coupe où ladite pulvérisation, brosse ou éponge est en communication de liquide avec un réservoir, et d'autres moyens sont prévus pour diriger la buse de la pulvérisation vers l'endroit où les moyens de coupe ont coupé la plante ou déplacé la brosse ou l'éponge en contact avec l'emplacement où les moyens de coupe ont coupé la plante.

9. Dispositif de collecte selon l'une quelconque des revendications précédentes, dans lequel le véhicule comprend deux courroies transporteuses agencées avec un chevauchement, dans lequel une première courroie transporteuse est agencée sous la station de coupe, de sorte que les produits/objets coupés par les moyens de coupe sont transportés sur le premier convoyeur, dans lequel ledit premier convoyeur peut tourner dans des directions opposées, dans une première direction, les objets sont transportés vers le second convoyeur sous-jacent et dans une seconde direction, est transporté vers une position de mise au rebut.

10. Véhicule de collecte selon la revendication 3, dans lequel on prévoit un ou plusieurs capteurs, dans lequel lesdits capteurs peuvent comprendre :
des moyens de capteur pour détecter la présence d'une tige de plante entre les moyens de préhension ;
des moyens de capteur ,pour détecter le mouvement ascendant ou la consommation de courant, raccordés avec le mouvement ascendant de la station de coupe ;
des moyens de capteur pour surveiller la fermeture de la fente verticale dans la station de coupe ;
des moyens de capteur pour détecter la présence d'un produit sur les moyens de collecte.
